# EUROPÄISCHE PATENTSCHRIFT

(11) **EP 1 975 364 B1**
(45) Veröffentlichungstag und Bekanntmachung des Hinweises auf die Patenterteilung: **04.07.2012**
(21) Anmeldenummer: 08152998.4
(22) Anmeldetag: 19.03.2008
(51) Int. Cl.: A01K 1/00, F24F 13/14, E06B 7/04, E06B 7/06

(54) **Zuluftventil für Stallgebäude**
Ventilation valve for barns
Soupape d'aération pour écuries

(30) Priorität: 23.03.2007 DE 202007004497 U
(43) Veröffentlichungstag der Anmeldung: 01.10.2008
(73) Patentinhaber: Big Dutchman International GmbH, 49377 Vechta (DE)
(72) Erfinder: Pagenstert, Winfried, 49429 Rechterfeld (DE)
(74) Vertreter: Birken, Lars

(56) Entgegenhaltungen:
- WO-A-98/30085
- WO-A-98/30086
- DE-U1- 9 108 603
- FR-A- 688 657
- US-A- 4 404 990

## Beschreibung

Die Erfindung betrifft ein Zuluftventil für die Belüftung geschlossener Gebäude, umfassend einen Rahmen mit einer Luftdurchtrittsöffnung, die von einem oberen Rahmenprofil, einem unteren Rahmenprofil und zwei seitlichen Rahmenprofilen, welches das obere und untere Rahmenprofil miteinander verbinden, begrenzt wird, eine Ventilklappe, welche um eine horizontale Achse schwenkbar an dem Rahmen solcherart gelagert ist, dass sie in einer geschlossenen Stellung die Luftdurchtrittsöffnung verschließt und in einer geöffneten Stellung die Luftdurchtrittsöffnung freigibt, eine Kopplungsvorrichtung zur Kopplung der Ventilklappe mit einer Betätigungsvorrichtung, mittels derer die Ventilklappe von der geöffneten Stellung in die geschlossene Stellung bewegt werden kann und/oder umgekehrt. Weiterhin betrifft die Erfindung einen modularen Bausatz für ein solches Zuluftventil.

Zuluftventile der vorgenannten Art werden insbesondere für die Belüftung von Stallgebäuden eingesetzt. Zu diesem Zweck können die Zuluftventile als tragende oder nicht-tragende Elemente in eine Wandöffnung vollständig oder teilweise eingesetzt werden und ermöglichen somit die gesteuerte Öffnung bzw. Verschließung einer solchen Wandöffnung.

Aus WO 98/30085 ist ein Ventilationssystem für Viehställe bekannt. Das Ventilationssystem umfasst ein an der Wand montiertes Lufteinlassventil mit einer angewinkelt angeordneten Ventilklappe, welche mittels eines Zugseiles zur Öffnung und Schließung gesteuert werden kann, indem sie verschwenkt wird um ihre untere Kante. Die Ventilklappe schließt an ihrem oberen Ende gegen eine schräg ausgeführte Kante ab.

Insbesondere dann, wenn solche Zuluftventile in Stallgebäuden für empfindliche Nutztiere verwendet werden, müssen die Zuluftventile hinsichtlich der Luftführungs- und Abdichtungseigenschaften hohe Anforderungen erfüllen. So ist es einerseits wünschenswert, die Luftführung aus dem Zuluftventil in den Stall in einer solchen Weise auszugestalten, dass ein in den Deckenbereich des Stallgebäudes gerichteter Zuluftstrom erzielt wird und dieser durch eine Wirbelbildung nach Durchlüftung des nahezu gesamten Raums in den Bodenbereich gelangt. Es ist bekannt, zum Zwecke dieser gewünschten Luftführung Luftleitklappen an solchen Zuluftventilen anzuordnen, jedoch kann durch solche Luftleitklappen nicht sichergestellt werden, dass die gewünschte Luftführung in allen Ventilstellungen zwischen der geschlossenen und der geöffneten Ventilstellung erzielt wird. Eine erste Aufgabe der Erfindung liegt darin, die Luftführung bei einem solchen Zuluftventil zu verbessern.

Ein weiteres Problem bekannter Zuluftventile besteht darin, dass insbesondere bei einem kleinen Öffnungsquerschnitt hohe Durchtrittsgeschwindigkeiten auftreten, welche oftmals zu unerwünschten Luftströmungen führen, die unmittelbar auf die am Boden des Stallgebäudes gehaltenen Tiere gerichtet sind und hierdurch Erkrankungen der Tiere verursachen können. Der Erfindung liegt die weitere Aufgabe zugrunde, solche unerwünschten Luftströmungen im Bereich kleiner Öffnungsquerschnitte zu verhindern.

Eine weitere Anforderung, die insbesondere an Zuluftventile gestellt wird, die in geographischen Gebieten mit starken klimatischen Schwankungen eingesetzt werden, ist die zuverlässige Abdichtung im geschlossenen Zustand. Da Zuluftventile häufig in verschmutzter Umgebung angeordnet sind und es wünschenswert ist, Wartungs- und Reinigungsintervalle langfristig zu gestalten, muss diese Dichtigkeitsanforderung auch unter widrigen Umgebungsbedingungen sichergestellt werden. Der Erfindung liegt die weitere Aufgabe zugrunde, die Dichtigkeit bekannter Zuluftventile zu verbessern, ohne hierbei die Funktionsempfindlichkeit des Zuluftventils gegenüber Verschmutzungen zu erhöhen.

Schließlich ist eine generelle Anforderung an Zuluftventile der eingangs beschriebenen Art, dass die Einbautiefe des Zuluftventils möglichst gering ist, um zu verhindern, dass das Zuluftventil bei Einbau in dünne Gebäudewände nach innen und/oder nach außen vorsteht, wodurch erhöhte Verschmutzung durch Ablagerung auftreten kann.

Diese Aufgaben werden durch ein Zuluftventil nach Anspruch 1 gelöst.

Durch das solcherart fortgebildete Zuluftventil wird eine Umlenkung des Zuluftstroms bereits bei Durchtritt durch die Luftdurchtrittsöffnung im Rahmen bewirkt und hierdurch eine wesentlich verbesserte Luftführung in Richtung der Decke des zu belüftenden Gebäudes erzielt. Die Erfindung setzt dabei die Erkenntnis um, dass die regelmäßig horizontale Eintrittsrichtung des Zuluftstroms bei horizontaler Durchleitung durch den Durchtrittsquerschnitt nur mit erheblichem aerodynamischen Aufwand in die gewünschte Richtung geleitet werden kann, wohingegen der aerodynamische Aufwand wesentlich reduziert oder sogar entfallen kann, wenn bereits durch eine bestimmte Gestaltung des oberen Rahmenprofils eine Beeinflussung des Luftstroms stattfindet. Zugleich kann durch die solcherart erfolgte Einbindung des Rahmenprofils in die Luftströmungsführung die Bautiefe des Zuluftventils reduziert werden, da etwaige aerodynamische Leitstrukturen, die sich an das Rahmenprofil anschließen, entfallen oder kompakter ausgebildet werden. Der schräg nach oben geneigte Luftführungswandabschnitt kann den gesamten nach innen weisenden Wandabschnitt des oberen Rahmenprofils ausbilden oder einen Teil dieses nach innen weisenden Wandabschnitts, der beispielsweise auf einen bestimmten Längenbereich und/oder einen bestimmten Tiefenbereich des oberen Rahmenprofils beschränkt ist. Sofern der schräg nach oben geneigte Luftführungswandabschnitt auf einen bestimmten Tiefenbereich des oberen Rahmenprofils beschränkt ist, ist es bevorzugt, den Luftführungswandabschnitt auf der zum Innenraum des Gebäudes weisenden Seite des oberen Rahmenprofils anzuordnen.

Insbesondere ist es bevorzugt, wenn der Luftführungs-Wandabschnitt sich über die gesamte Länge des oberen Rahmenprofils erstreckt. Auf diese Weise wird die vorteilhafte Luftführung über die gesamte Breite des Zuluftventils erreicht.

Erfindungsgemäß ist vorgesehen, dass das obere und untere Rahmenprofil im Querschnitt baugleich sind und um eine horizontale Ebene spiegelverkehrt zueinander verbaut sind. Auf diese Weise können einerseits die Fertigungskosten für das erfindungsgemäße Zuluftventil reduziert werden, da für das untere und das obere Rahmenprofil ein Profil aus einem einzigen Extrusionswerkzeug verwendet werden kann. Andererseits wird hierdurch die Einbaulage des erfindungsgemäßen Zuluftventils variabler gestaltet, da durch die spiegelsymmetrische Anordnung sowohl am oberen wie auch am unteren Rahmenprofil ein entsprechend geneigter Luftführungswandabschnitt ausgebildet ist.

Gemäß eines weiteren Aspekts der Erfindung zur Lösung der eingangs genannten Aufgaben wird das eingangs genannte Zuluftventil oder die zuvor beschriebenen erfindungsgemäßen Fortbildungen dieses Zuluftventils bevorzugt ausgestaltet, indem an den seitlichen Rahmenprofilen sich in Luftdurchtrittsrichtung erstreckende Wandflächen angeordnet sind, welche so angeordnet sind, dass sie in einem sich an die geschlossene Stellung der Ventilklappe anschließenden Teilöffnungsbereich der Ventilklappe einen sich einstellenden Öffnungsquerschnitt seitlich abdichten. Mit dieser Fortbildung wird erreicht, dass insbesondere dann, wenn die Ventilklappe nur geringfügig geöffnet ist und hierdurch ein kleiner Öffnungsquerschnitt bereitgestellt wird, mit der Folge, dass hohe Strömungsgeschwindigkeiten und Druckdifferenzen auftreten, die Luftströmung seitlich aus dem Durchtrittsquerschnitt austritt und hierdurch unerwünschte Luftströmungsanteile in seitlicher und zum Boden geneigter Richtung auftreten. Dabei macht sich die Erfindung die Erkenntnis zunutze, dass solche unerwünschten Strömungsbewegungen insbesondere bei kleinen Öffnungswinkeln auftreten und folglich eine vollständige seitliche Abdichtung des Bereichs seitlich und in Strömungsrichtung hinter der Luftdurchtrittsöffnung bei größeren Öffnungswinkeln der Ventilklappe nicht erforderlich ist, wodurch es vermieden werden kann, die Wandflächen um ein die Wartung erschwerendes und die Verschmutzung förderndes Maß in den Innenraum des Stallgebäudes hineinragend auszubilden. Insbesondere können die Wandflächen so ausgebildet sein, dass er den sich bei Teilöffnung der Ventilklappe ausbildenden seitlichen Spalt bis zu einem bestimmten Öffnungswinkel genau verschließt, beispielsweise indem jede Wandfläche im Wesentlichen dreieckig ausgeformt wird und mit einem spitzen Winkel in Richtung der horizontalen Schwenkachse der Ventilklappe weist.

Dabei ist es besonders bevorzugt, wenn die Wandflächen sich soweit in Luftdurchtrittsrichtung erstrecken, dass ausgehend von der geschlossenen Stellung bis zu einer Stellung der Ventilklappe, welche einen Öffnungsquerschnitt von 20%-40%, vorzugsweise 30% der Luftdurchtrittsfläche freigibt eine seitliche Abdichtung einer sich in dieser Stellung ergebenden Luftdurchtrittsebene erfolgt. Es hat sich herausgestellt, dass bei seitlicher Abdeckung in diesem Öffnungsbereich eine besonders hohe Effizienz der gewünschten Luftströmungsführung erreicht wird und bei einem Öffnen der Ventilklappe über diesen Öffnungsbereich hinaus auf eine seitliche Abdichtung verzichtet werden kann, da in diesem Fall die auftretenden Luftströmungsgeschwindigkeiten und Druckdifferenzen keine nachteilhafte Luftströmung in seitlicher oder nach unten geneigter Richtung verursachen.

Weiterhin ist für die Ausführungsform mit seitlichen Wandflächen bevorzugt, wenn die horizontale Achse im unteren Bereich des Rahmens angeordnet ist und die Wandflächen sich ausgehend von einem oberen Bereich der seitlichen Rahmenprofile erstrecken. Auf diese Weise wird einerseits durch die Anordnung der horizontalen Achse im unteren Bereich eine von vornherein bevorzugte Luftströmung in den Deckenbereich des Gebäudes ermöglicht, wenn die Ventilklappe nach innen zur Öffnung verschwenkt wird und mit dieser Konstellation ein seitlicher Luftaustritt bei schmalem Öffnungsquerschnitt verhindert.

Gemäß eines weiteren Aspekts der Erfindung wird zur Lösung der eingangs erläuterten Probleme bei einem Zuluftventil der eingangs genannten Art oder einem Zuluftventil der zuvor beschriebenen Bauweisen, welches eine am oberen Rahmenprofil schwenkbar gelagerte Luftleitklappe aufweist, die sich über die gesamte Länge des oberen Rahmenprofils erstreckt und einen Kopplungsabschnitt aufweist, der in einer zu diesem kongruenten Aufnahmeabschnitt am oberen Rahmenprofil eingesetzt ist, dadurch fortgebildet, dass der Kopplungsabschnitt als eine im Querschnitt abgerundete Kante ausgebildet ist, die in den als korrespondierende Aufnahmenut ausgebildeten Aufnahmeabschnitt eingesetzt ist, und die abgerundete Kante einen sich über die gesamte Länge der Kante erstreckenden Arretierungsvorsprung aufweist, der mit zumindest einem, vorzugsweise mehreren sich über die gesamte Länge der Aufnahmenut erstreckenden Arretierungsnuten zusammenwirkt, um eine oder entsprechend mehrere Stellungen der Luftleitklappe zu fixieren.

Mit dieser erfindungsgemäßen Ausgestaltung des Zuluftventils wird eine sichere Befestigung einer Luftleitklappe am oberen Rahmenprofil ermöglicht und hierbei auch bei langen oberen Rahmenprofilen eine Verstellbarkeit der Luftleitklappe ermöglicht, ohne dass hierdurch eine Bruchgefahr der Luftleitklappe auftritt. Es hat sich gezeigt, dass insbesondere dann, wenn lange Rahmenprofile mit entsprechend langen Luftleitklappen eingesetzt werden, durch Torsion der Luftleitklappe einerseits unerwünschte Abweichungen der Luftströmung von der gewünschten Richtung auftreten und andererseits die Luftleitklappe brechen oder anreißen kann. Um dies zu verhindern ist es erfindungsgemäß vorgesehen, die Luftleitklappe durch einen Arretierungsvorsprung, der in eine oder mehrere Arretierungsnuten eingreift, in der gewünschten Luftleitklappen-Stellung zu fixieren. Der Arretierungsvorsprung und die Arretierungsnut erstrecken sich dabei über die gesamte Länge der Luftleitklappe bzw. des oberen Rahmenprofils, wodurch vermieden wird, dass die zur Fixierung benötigte Kraft in einem einzigen Bereich auftritt und hierdurch eine Torsion der Luftleitklappe auftreten kann.

Dabei ist zu verstehen, dass bei dieser Fortbildung die Ausgestaltung von Kopplungsabschnitt und Aufnahmeabschnitt auch in umgekehrter Weise ausgeführt sein kann, d.h. der Kopplungsabschnitt ist am oberen Rahmenprofil ausgeführt und der Aufnahmeabschnitt an der Luftleitklappe. Ebenso ist zu verstehen, dass die Ausbildung von Arretierungsvorsprung und Arretierungsnut in umgekehrter Weise erfolgen kann, d.h. die Arretierungsnut kann am Kopplungsabschnitt ausgebildet sein und der Arretierungsvorsprung kann am Aufnahmeabschnitt ausgebildet sein, ohne dass hierbei von dem erfindungsgemäßen Prinzip abgewichen würde.

Insbesondere ist es dabei bevorzugt, wenn die Luftleitklappe in einer Stellung, in welche der Arretierungsvorsprung in der bzw. einer der Arretierungsnut(en) eingerastet ist, eine zu dem Luftführungs-Wandabschnitt fluchtende Luftleitfläche bereitstellt. Auf diese Weise wird eine besonders effiziente Luftströmungsführung in Richtung der Decke des zu belüftenden Gebäudes erzielt.

Die Ausführungsformen mit Luftleitklappe können fortgebildet werden, indem die Luftleitklappe ein Mehrkammer-Hohlprofil ist, vorzugsweise ein in Richtung entlang ihrer Schwenkachse extrudiertes Mehrkammer-Hohlprofil. Hierdurch wird einerseits die Stabilität der Luftleitklappe erhöht, ohne den für deren Herstellung erforderlichen Materialbedarf zu erhöhen. Andererseits kann hierdurch eine Isolationswirkung erzielt werden, welche einer Kondenswasserbildung und gegebenenfalls einer Eisbildung an der Luftleitklappe vorbeugt.

Gemäß eines weiteren Aspekts der Erfindung wird zur Lösung der eingangs erläuterten Probleme ein Zuluftventil der eingangs genannten Art oder ein Zuluftventil der zuvor beschriebenen Bauweisen so fortgebildet, dass die Ventilklappe im Bereich einer lagerseitigen Kante um die horizontale Achse schwenkbar gelagert ist und an einer dieser lagerseitigen Kante gegenüberliegenden abdichtenden Kante in der geschlossenen Stellung abdichtend am oberen Rahmenprofil anliegt. Durch diese Fortbildung wird eine verbesserte Abdichtung zwischen Ventilklappe und Rahmen erzielt, wodurch das Zuluftventil im geschlossenen Zustand unerwünschten Luftdurchtritt besser verhindern kann als bekannte Zuluftventile.

Dabei ist es insbesondere dann, wenn das Zuluftventil mit einem Luftführungs-Wandabschnitt der zuvor beschriebenen Art versehen ist, bevorzugt, wenn die abdichtende Kante in der geschlossenen Stellung an dem geneigten Luftführungs-Wandabschnitt abdichtend anliegt. Durch diese Bauweise wird einerseits eine günstige Doppelnutzung des Luftführungs-Wandabschnitts verwirklicht, indem einerseits dieser Wandabschnitt so geneigt ist, dass er eine günstige Luftführung bewirkt und andererseits die so ausgestaltete Neigung des Luftführungs-Wandabschnitts dazu genutzt wird, als Gegen-Dichtfläche für die obere Kante der Ventilklappe zu dienen, was zu einer besonders günstigen Dichtungsanordnung und folglich zuverlässigen Abdichtung führt.

Dabei ist es insbesondere bevorzugt, wenn an der abdichtenden Kante eine elastomere Dichtung durch Post-Co-Extrusion angeformt ist. Auf diese Weise wird die Abdichtwirkung weiter erhöht, ohne die Robustheit zu verringern oder den Fertigungsaufwand wesentlich zu erhöhen.

Noch weiter ist es bevorzugt, wenn die einlassseitige Wandfläche bis zu der abdichtenden Kante so verläuft, dass die durch die Durchtrittsöffnung hindurchtretende Strömung in geöffneter oder teilgeöffneter Stellung der Ventilklappe an der Wandfläche anliegt, insbesondere dass die einlassseitige Wandfläche bis zu der abdichtenden Kante eben verläuft. Hierdurch wird einerseits ein Strömungsabriss und andererseits eine Wirbelbildung im Bereich der Ventilklappe, insbesondere der abdichtender Kante vermieden, der sonst zu Strömungsverlusten und Eisbildung durch Kondenswasser führen könnte. Bevorzugt ist ein stufenfreier, ebener oder leicht gewölbter Verlauf der Wandfläche.

Weiterhin ist es bevorzugt, wenn die einlassseitige Wandfläche an der abdichtenden Kante in einer scharfkantigen Strömungsabrisskante endet. Unter scharfkantiger Strömungsabrisskante ist hierbei zu verstehen, dass die Strömungsabrisskante insbesondere so ausgebildet ist, dass sich kein stationärer Wirbel im Bereich der abdichtenden Kante ausbilden kann. Solche stationären Wirbel führen häufig zur Kondenswasserbildung und können in Verbindung mit unterdruckbedingter Abkühlung im Bereich der Kante zu Eisbildung führen, was die Abdichtung zwischen der Kante und der Gegendichtfläche beeinträchtigt. Eine scharfkantige Strömungsabrisskante kann insbesondere erzielt werden, indem im Bereich der Kante die einlassseitige Wandfläche in einem Winkel von mehr als 90°, vorzugsweise mehr als 120° abknickt. Weiterhin ist es vorteilhaft, wenn die Strömungsabrisskante mit einem Radius von weniger als 2mm, insbesondere weniger als 1 mm ausgebildet ist.

Das erfindungsgemäße Zuluftventil kann weiter fortgebildet werden durch eine Rückstellvorrichtung, welche auf die Ventilklappe eine Kraft ausübt, die entgegengesetzt zu einer durch die Betätigungsmittel bewirkten Öffnungs- oder Schließkraft in die geschlossene bzw. entsprechend geöffnete Stellung gerichtet ist. Hierdurch wird eine Konstruktion verwirklicht, die eine passive Öffnung oder Schließung des Zuluftventils bewirkt und bei der mittels der Betätigungsmittel eine gegen diese passive Öffnung bzw. Schließung wirkende Schließ- bzw. Öffnungskraft auf die Ventilklappe aufgebracht wird.

Grundsätzlich kann die Rückstellvorrichtung dabei beispielsweise Federelemente wie Spiral-, Schrauben oder Gasdruckfedern umfassen. Es ist aber insbesondere bevorzugt, wenn die Rückstellvorrichtung ein Gewicht umfasst, welches beabstandet von der horizontalen Achse an der Ventilklappe angeordnet ist und eine Gewichtskraft auf die Ventilklappe ausübt, die in Einbaulage an der horizontalen Achse vorbei gerichtet ist, insbesondere so gerichtet ist, dass sie eine Öffnung der Ventilklappe bewirkt. So kann bei dieser Ausgestaltung das Gewicht an der Ventilklappe auf der zum Innenraum des Gebäude weisenden Seite oberhalb und zum Innenraum versetzt zu der horizontalen Achse angeordnet sein und auf diese Weise eine passive Öffnung der Ventilklappe bewirken.

Noch weiter ist es bevorzugt, wenn das erfindungsgemäße Zuluftventil fortgebildet wird, indem an jedem der seitlichen Rahmenprofile eine in der geschlossenen Stellung parallel zur Ventilklappe liegende Dichtfläche ausgebildet ist, auf welcher die Ventilklappe im geschlossenen Zustand mit einem seitlichen Dichtungsbereich aufliegt. Diese Fortbildung ermöglicht gegenüber bekannten Zuluftventilen, bei denen eine Schleifdichtung zwischen dem Rand der Ventilklappe und den inneren Wandflächen des seitlichen Rahmenprofils wirkt, eine erheblich verbesserte Dichtungswirkung und zugleich erheblich längere Standzeit der Dichtung, da diese einerseits mit einer hohen Dichtkraft betätigt wird und andererseits keinem Verschleiß ausgesetzt ist.

Schließlich kann das erfindungsgemäße Zuluftventil weiter fortgebildet werden, indem die Ventilklappe an einer lagerseitigen Kante um die horizontale Achse schwenkbar gelagert ist und an dieser lagerseitigen Kante in der geschlossenen Stellung mittels einer zweiten elastomeren Dichtung gegenüber dem Rahmen abgedichtet ist. Diese Fortbildung beruht auf der Erkenntnis, dass es regelmäßig zur Sicherstellung des notwendigen Freigangs im Bereich der horizontalen Achslagerung notwendig ist, im Bereich der lagerseitigen Kante einen Spalt freizulassen, der jedoch im geschlossenen Betriebszustand des Zuluftventils zu unerwünschter Luftleckage führen kann. Es wird daher bevorzugt vorgesehen, dass in diesem Bereich eine zweite, elastomere Dichtung angeordnet ist, die in der geschlossenen Stellung diesen Spalt zwischen Ventilklappe und unterem Rahmenprofil abdichtet.

Dabei kann die zweite elastomere Dichtung ebenso wie die erste elastomere Dichtung bevorzugt eine post-co-extrudierte Dichtung sein.

Das erfindungsgemäße Zuluftventil kann weiter fortgebildet werden, indem die Ventilklappe als Mehrkammer-Hohlprofil ausgeführt wird, insbesondere als ein in Richtung entlang der horizontalen Schwenkachse extrudiertes Mehrkammer-Hohlprofil. Hierdurch wird einerseits die Stabilität der Ventilklappe erhöht, ohne den für deren Herstellung erforderlichen Materialbedarf zu erhöhen. Andererseits kann hierdurch eine Isolationswirkung erzielt werden. Da die Ventilklappe in der geschlossenen Stellung die einzige isolierende Wandung darstellt, welche die Durchtrittsöffnung verschließt, ist diese Isolationswirkung zur thermischen Isolierung des belüfteten Raumes maßgeblich. Zudem kann hierdurch einer Kondenswasserbildung und gegebenenfalls einer Eisbildung an der Ventilklappe vorgebeugt werden.

Dabei ist es insbesondere bevorzugt, wenn die Ventilklappe mittels zumindest einer inneren Trennwand unterteilt ist, welche etwa parallel zu der in geschlossener Stellung zur Einlassseite weisenden Wandfläche der Ventilklappe liegt und sich parallel zur horizontalen Schwenkachse erstreckt. Alternativ oder zusätzlich ist es bevorzugt, wenn die Ventilklappe mittels zumindest einer inneren Trennwand unterteilt ist, welche etwa senkrecht zu der in geschlossener Stellung zur Einlassseite weisenden Wandfläche der Ventilklappe liegt und sich parallel zur horizontalen Schwenkachse erstreckt. Auf diese Weise wird eine Unterteilung der Ventilklappe in mehrere Kammern erzielt, welche sich beim Extrusionherstellungsvorgang der Ventilklappe unmittelbar erzeugen lässt. Zudem kann eine vorteilhafte Unterteilung einerseits in Kammern erreicht werden, die bei geschlossener Ventilklappe in thermischer Isolationsrichtung zueinander gestaffelt sind und andererseits bei (teil-)geöffneter Klappe in Luftströmungsrichtung zueinander gestaffelt sind.

Ein weiterer Aspekt der Erfindung besteht in einem modularen Bausatz für ein Zuluftventil der zuvor beschriebenen Bauweise, umfassend standardisierte seitliche Rahmenprofile einer vorgegebenen Größe, eine Auswahl unterschiedlich langer oberer sowie unterer Rahmenprofile und hierzu passende, unterschiedlich breite Ventilklappen, Eckverbinder zum Verbinden der seitlichen Rahmenprofile mit den oberen bzw. unteren Rahmenprofilen, wobei die unterschiedlich langen oberen und unteren Rahmenprofile bzw. die entsprechend unterschiedlich breiten Ventilklappen mittels der Eckverbinder zu einem Zuluftventil mit einer gewünschten Durchsatzleistung montierbar sind.

Mit einem solchen Bausatz wird es dem Nutzer des Zuluftventils ermöglicht, mittels einfacher Maßnahmen das Zuluftventil an den gewünschten Luftdurchsatz anzupassen, indem die seitlichen Rahmenprofile für jede Baugröße des Zuluftventils gleich konstruiert und dimensioniert sind und mit entsprechend des Luftdurchsatzes abgelenkten oberen und unteren Rahmenprofilen über Eckverbinder zu einem Rahmen für das solcherart angepasste Zuluftventil verbunden werden, wobei in dem Rahmen dann eine Ventilklappe mit entsprechender Breite drehbar gelagert wird.

Eine bevorzugte Ausführungsform wird anhand der Figuren beschrieben. Es zeigen:
- Fig. 1:: eine perspektivische Ansicht des erfindungsgemäßen Zuluftventils von vorne seitlich oben in einer geschlossenen Stellung,
- Fig. 2:: eine geschnittene Seitenansicht des Zuluftventils in der geschlossenen Stellung,
- Fig. 3 und 4:: Ansichten gemäß Figuren 1 und 2 des Zuluftventils in einer um 30% geöffneten Stellung,
- Fig. 5:: eine Detailansicht des Ausschnitts X in Figur 4,
- Fig. 6:: eine Detailansicht des Ausschnitts Z in Figur 5 in geschnittener Ansicht,
- Fig. 7:: eine Detailansicht des Ausschnitts N in Figur 5,
- Fig. 8:: eine Detailansicht des Ausschnitts Y in Figur 4, und
- Fig. 9 und 10:: Ansichten gemäß Figuren 1 und 2 des Zuluftventils in einer voll geöffneten Stellung.

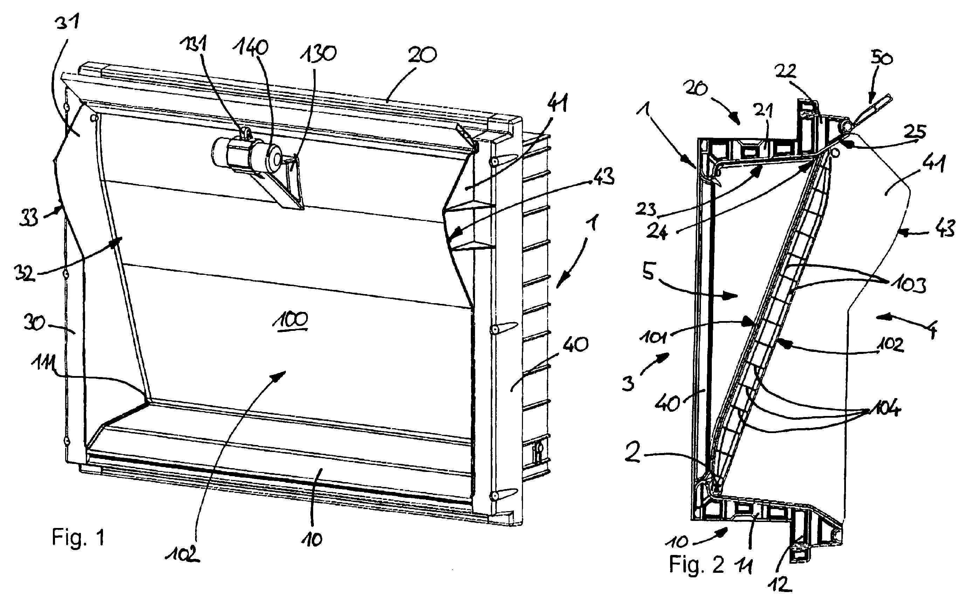

Bezug nehmend zunächst auf die Figuren 1 und 2 umfasst die dargestellte Ausführungsform einen Rahmen 1, in dem eine Ventilklappe 100 um eine Achse 2 schwenkbar gelagert eingesetzt ist.

Der Rahmen 1 umfasst ein unteres Rahmenprofil 10, ein oberes Rahmenprofil 20 und zwei seitliche Rahmenprofile 30, 40, welche das untere und obere Rahmenprofil 10, 20 miteinander verbinden.

Wie insbesondere in Figur 2 gut erkennbar, weisen das untere und obere Rahmenprofil einen ersten Abschnitt 11, 21 auf, welcher in eine Öffnung in einer Außenwand eines zu belüftenden Gebäudes eingesetzt wird und einen zweiten Abschnitt 12, 22, welcher eine größere Außenabmessung als die ersten Abschnitte des Rahmens ausbildet und auf der inneren Wandfläche der Außenwand des Gebäudes anliegt und solcherart eine Verblendung der Wandöffnung darstellt. Die seitlichen Rahmenprofile 30, 40 sind in gleicher Weise ausgebildet, wie für das rechte, seitliche Rahmenprofil 40 in Figur 1 erkennbar.

Die Rahmenprofile 10, 40 sind in den jeweiligen vier Ecken des Rahmens 1 mittels Eckverbindern (nicht dargestellt) verbunden, welche L-förmig ausgebildet sind und entsprechend in Hohlräume in den Rahmenprofilen eingesteckt sind.

Die Durchströmungsrichtung des abgebildeten Zuluftventils ist in der Abbildung gemäß Figur 2 von links nach rechts. Die Ventilklappe 100 ist mittels zweier Achsstifte 111 in den seitlichen Rahmenprofilen 30, 40 unmittelbar benachbart zum unteren Rahmenprofil 10 schwenkbar gelagert. Die Achsstifte 111 sind auf der Einlassseite es Rahmens angeordnet. Die Ventilklappe 100 verläuft ausgehend von der durch die Achsstifte 111 definierten horizontalen Schwenkachse schräg nach oben und ist in Richtung der Auslassseite geneigt.

Die Ventilklappe 100 ist als Mehrfach-Hohlkammerplatte ausgebildet, um durch die solcherart erzielte Isolation eine Kondensation an der Ventilklappe 100 zu verhindern und im geschlossenen Zustand eine günstige thermische Isolierung bereitzustellen. Zu diesem Zweck besteht die Ventilklappe 100 aus einer im geschlossenen Zustand zur Einlassseite weisenden Wandfläche 101 und einer in diesem Zustand zur Auslassseite weisenden Wandfläche 102, zwischen denen ein Hohlraum ausgebildet ist, der durch Quer- und Längsverrippungen 103, 104 mehrfach unterteilt ist.

Die Innenwand des oberen Rahmenprofils 20 verläuft ausgehend von der Einlassseite 3 des Zuluftventils um einen kleinen Winkel geneigt nach oben in Richtung der Auslassseite 4 des Zuluftventils. Der solcherart definierte, leicht nach oben geneigte innere Wandabschnitt 23 des oberen Rahmenprofils geht an einer Linie 24 in einen Wandabschnitt 25 über, welcher stärker nach oben geneigt ist als der Wandabschnitt 23.

Die obere Kante 120 der Ventilklappe 100 liegt in der in den Figuren 1 und 2 gezeigten, geschlossenen Stellung an diesem nach oben geneigten Wandabschnitt 25 an und dichtet auf diese Weise mit einer an der Kante 120 ausgebildeten, post-co-extrudierten Dichtung einen Durchtrittsquerschnitt 5 des Rahmens 1 im oberen Bereich ab.

An der Ventilklappe 100 ist an einem Auslegerarm 130 ein Gewicht 140 befestigt, dessen Gewichtskraft die Ventilklappe 100 in die geöffnete Stellung zieht. Weiterhin befindet sich am Auslegerarm 130 eine Befestigungsöse 131, an welcher ein Seilzug oder ein mechanisches Gestänge befestigt werden kann, um die Ventilklappe 100 in die geschlossene Stellung zu bewegen.

An dem oberen Rahmenprofil 20 ist weiterhin auslassseitig eine Luftführungsklappe 50 angeordnet, die sich über die gesamte Länge des oberen Rahmenprofils 20 erstreckt und nachfolgend im Detail beschrieben wird.

An den seitlichen Rahmenprofilen 30, 40 sind Luftleitflächen 31, 41 angeformt, die sich ausgehend von etwa der halben Länge der seitlichen Rahmenprofile im oberen Bereich in Richtung der Auslassöffnung 4 erstrecken. Die Luftleitflächen 31, 41 sind so bemessen, dass sie einen durch die horizontale Achse 2 und den Radius der Ventilklappe 100 definiertes Kreissegment bis zu einem Öffnungswinkel der Ventilklappe von etwa 20°, was einer effektiven Durchtrittsöffnung von etwa 30% entspricht, seitlich abdecken.

In der in den Figuren 1 und 2 dargestellten geschlossenen Stellung liegt die Ventilklappe in den seitlichen Bereichen an einer Dichtungskante 32 dichtend an, welche an den seitlichen Rahmenprofilen 30, 40 ausgebildet ist und ebenso wie die Ventilklappe 100 in der geschlossenen Stellung ausgehend vom unteren Bereich der Einlassseite 3 in den oberen Bereich der Auslassseite 4 schräg verläuft.

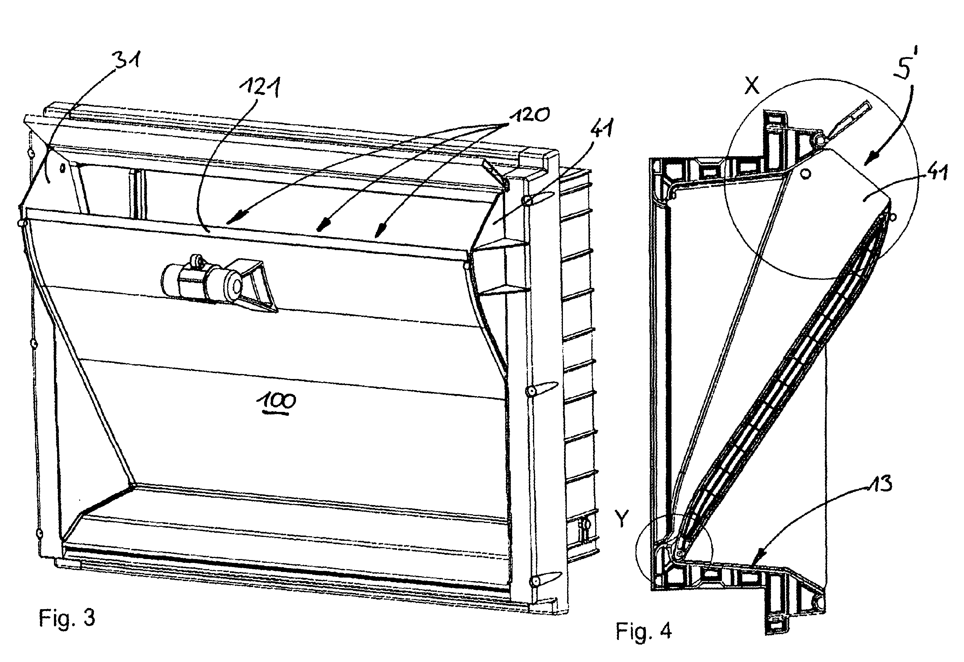

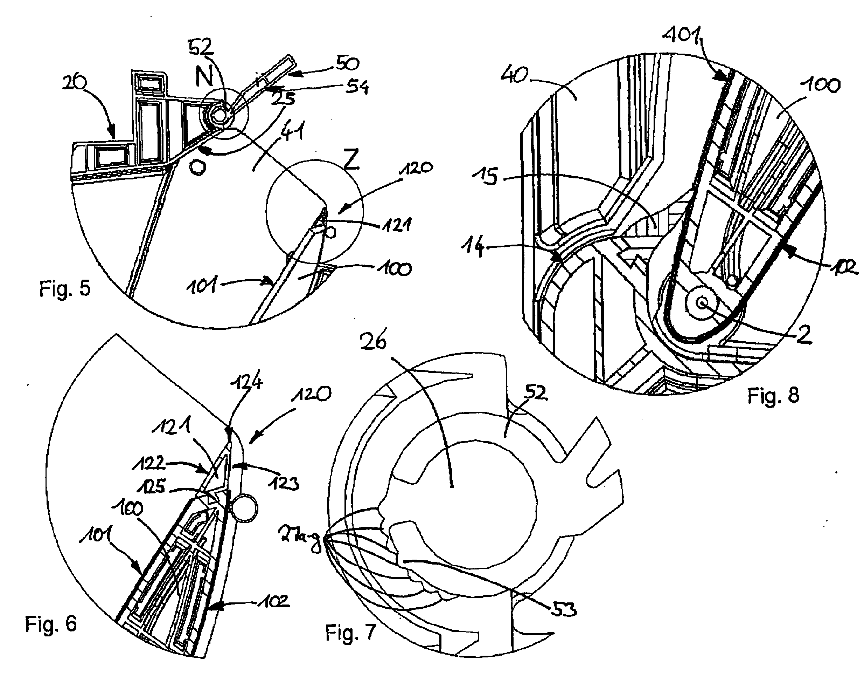

Die Figuren 3 und 4 zeigen das Zuluftventil in einer teilgeöffneten Stellung, Figuren 5-7 zeigen Details des Zuluftventils in dieser Stellung. Die Ventilklappe 100 ist in der dargestellten, teilgeöffneten Stellung um etwa 20° um die horizontale Achse 2 verschwenkt. In dieser Öffnungsstellung fluchtet die zur Auslassseite weisende Wand 102 der Ventilklappe 100 im oberen Bereich mit den zur Auslassseite 4 weisenden Kanten 33, 43 der Luftleitflächen 31, 41. In dieser Stellung bildet das Zuluftventil einen schmalen Öffnungsquerschnitt aus, der in Fig. 4 mit dem Bezugszeichen 5' bezeichnet ist. Durch diesen schmalen Öffnungsquerschnitt 5' strömt die durch den Durchtrittsquerschnitt 5 einströmende Luft aufgrund des großen Druckgefälles zum Innenraum des zu belüftenden Gebäudes mit hoher Geschwindigkeit. Hierbei wird die durchströmende Luft durch die Luftleitflächen 31, 41 daran gehindert, seitlich aus dem Zuluftventil auszutreten und wird stattdessen in einem geraden, nach oben gerichteten Luftstrahl in den Deckenbereich des zu belüftenden Gebäudes geleitet.

Fig. 5 zeigt eine Detailansicht des erfindungsgemäßen Zuluftventils in teilgeöffneter Stellung aus dem Bereich des Durchtrittsquerschnitts 5'. Es ist erkennbar, dass die Luftleitklappe 50 als im Wesentlichen rechteckiges Hohlprofil ausgebildet ist, welches an einer befestigungsseitigen Kante ein längsgeschlitztes, zylindrisches Profil 52 angeformt hat. Dieses zylindrische Profil 52 ist in eine entsprechend im Querschnitt als Kreissegment von mehr als 180° ausgebildete Nut 26 eingesetzt und wird in dieser Nut durch elastische Kräfte form- und kraftschlüssig gehalten. Die Nut 26 ist in der zur Auslassseite 4 weisenden Kante des oberen Rahmenprofils 20 ausgebildet.

Auf dem Grund der Nut 26 sind mehrere Arretierungsnuten 27a-g ausgeformt. Sowohl die Nut 26 als auch die Arretierungsnuten 27a-g erstrecken sich über die gesamte Länge des oberen Rahmenprofils 20.

An dem zylindrisch ausgeformten Abschnitt 52 ist ein Arretierungsvorsprung 53 ausgeformt, welcher kongruent zu den Arretierungsnuten 27a-g ausgeformt ist. In der in den Figuren 5 und 7 abgebildeten Stellung der Luftleitklappe 50 ist der Arretierungsvorsprung 27 in die mittlere der sieben Arretierungsnuten 27a-g eingerastet und in dieser Stellung fluchtet eine zum Durchtrittsquerschnitt 5' weisende Luftleitfläche 54 der Luftleitklappe 50 mit dem schräg nach oben geneigten Wandabschnitt des oberen Rahmenprofils.

Fig. 6 zeigt die obere, der lagerseitigen Kante gegenüberliegende Dichtungskante 120 der Ventilklappe im Detail. Wie man erkennen kann, ist an dieser Dichtungskante 120 eine elastomere Hohlkammerdichtung 121 angeformt, was durch ein Post-Koextrusionsverfahren erfolgen kann. Die Hohlkammerdichtung 121 ist im Querschnitt dreieckig und hat eine zur Einlassseite weisende erste Außenfläche 122, die fluchtend und eben zur einlassseitigen Wandfläche 101 der Ventilklappe liegt. Hierdurch wird eine an der einlassseitigen Wandfläche 101 anliegende Luftströmung bis in den Bereich der Dichtungskante 120 erzielt.

An der Hohlkammerdichtung 121 ist ein im Querschnitt schwalbenschwanzförmig ausgeformter Steg 125 angeformt, der in eine entsprechend ausgeformte Längsnut in der Kante der Ventilklappe 100 eingesetzt ist und auf diese Weise die Hohlkammerdichtung formschlüssig an der Ventilklappe 100 befestigt.

Auf der zur Auslassseite weisenden Seite weist die Hohlkammerdichtung 121 eine zweite Wandfläche 123 auf. Die zweite Wandfläche 123 und die erste Wandfläche 122 stoßen an der Dichtungskante 120 zusammen und bilden hier eine scharfkantige Abrisskante 124 aus, welche eine Wirbelbildung und daraus folgende Eisbildung im Bereich der Hohlkammerdichtung 120 verhindert.

Wie insbesondere aus Fig. 5 gut für den Fachmann vorstellbar, bildet die Abrisskante 124 auch die eigentliche, linienförmige Dichtungskante aus, welche bei Schließen der Ventilklappe 100 an den geneigten Wandabschnitt 25 des oberen Rahmenprofils anstößt. Aufgrund ihrer elastomeren Materialeigenschaften ist die Hohlkammerdichtung 121 im Zuge diese Schließvorgangs in der Lage, sich zu verformen, insbesondere indem die außenseitige zweite Wandfläche 123 sich verformt, beispielsweise einknickt, und sich hierdurch bündig und zuverlässig dichtend an den geneigten Wandabschnitt anzulegen. Diese Abdichtung wird insbesondere durch das Zusammenwirken der elastomeren Hohlkammerdichtung 121 mit der spezifischen Neigung des Wandabschnitts 25 erzielt.

Fig. 8 zeigt eine Detailansicht der Ventilklappe und des unteren Rahmenprofils 10 im Bereich der horizontalen Schwenkachse 2. Es ist erkennbar, dass am unteren Rahmenprofil 10 eine abgerundete, zur Einlassseite 3 bzw. zum Inneren des Durchtrittsquerschnitts 5 des Zuluftventils weisende abgerundete Kante 14eine post-koextrudierte Elastomerdichtung 15 angeformt, welcher in der abgebildeten, teilgeöffneten Stellung an der zur Einlassseite 3 weisenden Wandfläche der Ventilklappe 100 anliegt. Diese Anlage wird in der geschlossenen Stellung weiter verstärkt, so dass sowohl in der geschlossenen Stellung als auch in der abgebildeten, teilgeöffnete Stellung durch die Elastomerdichtung 15 verhindert wird, dass von der Einlassseite 3 hereinströmende Luft durch den Spalt zwischen Ventilklappe und unterem Rahmenprofil hindurchströmt.

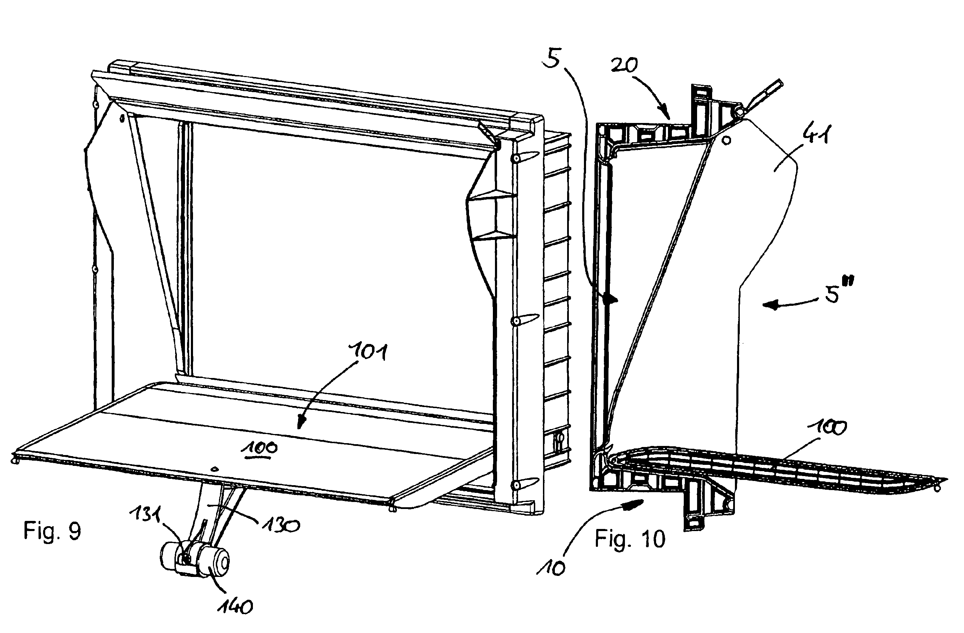

Die Figuren 9 und 10 zeigen die Ausführungsform des Zuluftventils in der voll geöffneten Stellung. Wie erkennbar ist, wird in dieser Stellung ein Durchtrittsquerschnitt 5" freigegeben, der im Wesentlichen dem Duchtrittsquerschnitt 5 entspricht. Die Ventilklappe 100 ist in dieser voll geöffneten Stellung ausgehend von der Einlassseite 3 leicht nach unten geneigt, wodurch Wasseransammlungen im Bereich des Zuluftventils verhindert werden. Die Neigung wird dadurch ermöglicht, dass das obere Rahmenprofil 20 und das untere Rahmenprofil 10 im Querschnitt baugleich sind und folglich die zur Austrittsöffnung weisende Wandfläche 102 der Ventilklappe auf einer zu der Wandfläche 23 korrespondierenden, leicht nach unten geneigten Wandfläche 13 des unteren Rahmenprofils aufliegt.

## Patentansprüche

1. Zuluftventil für die Belüftung geschlossener Gebäude, umfassend
- einen Rahmen (1) mit einer Luftdurchtrittsöffnung (5), die von einem oberen Rahmenprofil (20), einem unteren Rahmenprofil (10) und zwei seitlichen Rahmenprofilen (30, 40), welches das obere und untere Rahmenprofil miteinander verbinden, begrenzt wird,
- eine Ventilklappe (100), welche um eine horizontale Achse (2) schwenkbar an dem Rahmen solcherart gelagert ist, dass sie in einer geschlossenen Stellung die Luftdurchtrittsöffnung (5) verschließt und in einer geöffneten Stellung die Luftdurchtrittsöffnung freigibt,
- eine Kopplungsvorrichtung (131) zur Kopplung der Ventilklappe mit einer Betätigungsvorrichtung, mittels derer die Ventilklappe von der geöffneten Stellung in die geschlossene Stellung bewegt werden kann und/oder umgekehrt, wobei
das obere Rahmenprofil (20) auf der Austrittsseite (4) der Luftdurchtrittsöffnung (5) einen zur Luftdurchtrittsöffnung (5) weisenden Luftführungs-Wandabschnitt (25) aufweist, der schräg nach oben geneigt verläuft, **dadurch gekennzeichnet, dass** das obere und untere Rahmenprofil (20, 10) im Querschnitt baugleich sind und um eine horizontale Ebene spiegelverkehrt zueinander verbaut sind.

2. Zuluftventil nach Anspruch 1,
**dadurch gekennzeichnet, dass** der Luftführungs-Wandabschnitt (25) sich über die gesamte Länge des oberen Rahmenprofils (20) erstreckt.

3. Zuluftventil nach einem der vorhergehenden Ansprüche,
**dadurch gekennzeichnet, dass** an den seitlichen Rahmenprofilen (30, 40) sich in Luftdurchtrittsrichtung erstreckende Wandflächen (31, 41) angeordnet sind, welche so angeordnet sind, dass sie in einem sich an die geschlossene Stellung der Ventilklappe anschließenden Teilöffnungsbereich der Ventilklappe einen sich einstellenden Öffnungsquerschnitt seitlich abdichten.

4. Zuluftventil nach Anspruch 3,
**dadurch gekennzeichnet, dass** die Wandflächen (31, 41) sich soweit in Luftdurchtrittsrichtung erstrecken, dass ausgehend von der geschlossenen Stellung bis zu einer Stellung der Ventilklappe (100), welche einen Öffnungsquerschnitt von 20%-40%, vorzugsweise 30% der Luftdurchtrittsfläche freigibt eine seitliche Abdichtung einer sich in dieser Stellung ergebenden Luftdurchtrittsebene erfolgt.

5. Zuluftventil nach Anspruch 3 oder 4,
**dadurch gekennzeichnet, dass** die horizontale Achse (2) im unteren Bereich des Rahmens angeordnet ist und die Wandflächen (31, 41) sich ausgehend von einem oberen Bereich der seitlichen Rahmenprofile in Luftdurchtrittsrichtung erstrecken.

6. Zuluftventil nach einem der vorhergehenden Ansprüche, mit einer am oberen Rahmenprofil (20) schwenkbar gelagerten Luftleitklappe (50), die sich über die gesamte Länge des oberen Rahmenprofils erstreckt und einen Kopplungsabschnitt (52) aufweist, der in einer zu diesem kongruenten Aufnahmeabschnitt (26) am oberen Rahmenprofil (20) eingesetzt ist,
**dadurch gekennzeichnet, dass** der Kopplungsabschnitt (52) als eine im Querschnitt abgerundete Kante (52) ausgebildet ist, die in den als korrespondierende Aufnahmenut (26) ausgebildeten Aufnahmeabschnitt eingesetzt ist, und die abgerundete Kante (52) einen sich über die gesamte Länge der Kante erstreckenden Arretierungsvorsprung (53) aufweist, der mit zumindest einem, vorzugsweise mehreren sich über die gesamte Länge der Aufnahmenut erstreckenden Arretierungsnuten (27a-g) zusammenwirkt, um eine oder entsprechend mehrere Stellungen der Luftleitklappe zu fixieren.

7. Zuluftventil nach Anspruch 6,
**dadurch gekennzeichnet, dass** die Luftleitklappe (50) in einer Stellung, in welcher der Arretierungsvorsprung in der bzw. einer der Arretierungsnut(en) (27a-g) eingerastet ist, eine zu dem Luftführungs-Wandabschnitt fluchtende Luftleitfläche bereitstellt.

8. Zuluftventil nach Anspruch 6 oder 7,
**dadurch gekennzeichnet, dass** die Luftleitklappe (50) ein Mehrkammer-Hohlprofil ist, vorzugsweise ein in Richtung entlang ihrer Schwenkachse extrudiertes Mehrkammer-Hohlprofil.

9. Zuluftventil nach einem der vorhergehenden Ansprüche,
**dadurch gekennzeichnet, dass** die Ventilklappe (100) im Bereich einer lagerseitigen Kante um die horizontale Achse (2) schwenkbar gelagert ist und an einer dieser lagerseitigen Kante gegenüberliegenden abdichtenden Kante (120) in der geschlossenen Stellung abdichtend am oberen Rahmenprofil (20) anliegt.

10. Zuluftventil nach Anspruch 9,
**dadurch gekennzeichnet, dass** die abdichtende Kante (120) in der geschlossenen Stellung an dem geneigten Luftführungs-Wandabschnitt (25) abdichtend anliegt.

11. Zuluftventil nach Anspruch 9 oder 10,
**dadurch gekennzeichnet, dass** an der abdichtenden Kante (120) eine elastomere vorzugsweise post-coextrudierte Dichtung angeformt ist.

12. Zuluftventil nach einem der vorhergehenden Ansprüche 9 bis 11,
**dadurch gekennzeichnet, dass** die einlassseitige Wandfläche (101) der Ventilklappe (100) bis zu der abdichtenden Kante so verläuft, dass die durch die Durchtrittsöffnung (5) hindurchtretende Strömung in geöffneter oder teilgeöffneter Stellung der Ventilklappe (100) an der Wandfläche (101) anliegt, insbesondere dass die die einlassseitige Wandfläche bis zu der abdichtenden Kante eben verläuft.

13. Zuluftventil nach einem der vorhergehenden Ansprüche 9 bis 12,
**dadurch gekennzeichnet, dass** die einlassseitige Wandfläche (101) der Ventilklappe (100) an der abdichtenden Kante (120) in einer scharfkantigen Strömungsabrisskante (124) endet.

14. Zuluftventil nach einem der vorhergehenden Ansprüche,
**gekennzeichnet durch** eine Rückstellvorrichtung (140), welche auf die Ventilklappe (100) eine Kraft ausübt, die entgegengesetzt zu einer **durch** die Betätigungsmittel bewirkten Öffnungs- oder Schließkraft in die geschlossene bzw. entsprechend geöffnete Stellung gerichtet ist.

15. Zuluftventil nach dem vorhergehenden Anspruch,
**dadurch gekennzeichnet, dass** die Rückstellvorrichtung ein Gewicht (140) umfasst, welches beabstandet von der horizontalen Achse (2) an der Ventilklappe (100) angeordnet ist und eine Gewichtskraft auf die Ventilklappe (100) ausübt, die in Einbaulage an der horizontalen Achse (2) vorbei gerichtet ist, insbesondere so gerichtet ist, dass sie eine Öffnung der Ventilklappe (100) bewirkt.

16. Zuluftventil nach einem der vorhergehenden Ansprüche,
**dadurch gekennzeichnet, dass** an jedem der seitlichen Rahmenprofile (30, 40) eine in der geschlossenen Stellung parallel zur Ventilklappe (100) liegende Dichtfläche (32) ausgebildet ist, auf welcher die Ventilklappe (100) im geschlossenen Zustand mit einem seitlichen Dichtungsbereich aufliegt.

17. Zuluftventil nach einem der vorhergehenden Ansprüche,
**dadurch gekennzeichnet, dass** die Ventilklappe (100) an einer lagerseitigen Kante um die horizontale Achse (2) schwenkbar gelagert ist und an dieser lagerseitigen Kante in der geschlossenen Stellung mittels einer zweiten elastomeren Dichtung (15) gegenüber dem Rahmen (1) abgedichtet ist.

18. Zuluftventil nach einem der vorhergehenden Ansprüche,
**dadurch gekennzeichnet, dass** die Ventilklappe (100) ein Mehrkammer-Hohlprofil ist, insbesondere ein in Richtung entlang der horizontalen Schwenkachse extrudiertes Mehrkammer-Hohlprofil.

19. Zuluftventil nach dem vorhergehenden Anspruch,
**dadurch gekennzeichnet, dass** die Ventilklappe (100) mittels zumindest einer inneren Trennwand (102) unterteilt ist, welche etwa parallel zu der in geschlossener Stellung zur Einlassseite weisenden Wandfläche der Ventilklappe (100) liegt und sich parallel zur horizontalen Schwenkachse erstreckt.

20. Zuluftventil nach dem vorhergehenden Anspruch 18 oder 19,
**dadurch gekennzeichnet, dass** die Ventilklappe mittels zumindest einer inneren Trennwand unterteilt ist, welche etwa senkrecht zu der in geschlossener Stellung zur Einlassseite weisenden Wandfläche der Ventilklappe liegt und sich parallel zur horizontalen Schwenkachse erstreckt.

21. Modularer Bausatz für ein Zuluftventil nach einem der vorhergehenden Ansprüche, umfassend
- standardisierte seitliche Rahmenprofile (30, 40) einer vorgegebenen Größe,
- eine Auswahl unterschiedlich langer oberer sowie unterer Rahmenprofile (10, 20) und
- hierzu passende unterschiedlich breite Ventilklappen (100),
- Eckverbinder zum Verbinden der seitlichen Rahmenprofile mit den oberen bzw. unteren Rahmenprofilen,
wobei die unterschiedlich langen oberen und unteren Rahmenprofile bzw. die entsprechend unterschiedlich breiten Ventilklappen (100) mittels der Eckverbinder zu einem Zuluftventil mit einer gewünschten Durchsatzleistung montierbar sind und das obere und untere Rahmenprofil (20, 10) im Querschnitt baugleich sind und um eine horizontale Ebene spiegelverkehrt zueinander verbaut sind.

## Claims

1. An air supply shutter for ventilating closed buildings, comprising
- a frame (1) provided with an air vent (5), which is defined by an upper frame profile (20), a lower frame profile (10) and two lateral frame profiles (30, 40) which join the upper and lower frame profiles to each other,
- a shutter flap (100) which is pivotably mounted on the frame about a horizontal axis (2) such that it closes the air vent (5) when in a closed position and releases the air vent (5) when in an open position,
- a coupling device (131) for coupling the shutter flap to an actuating device by means of which the shutter flap can be moved from the open position into the closed position and/or vice versa, wherein
the upper frame profile (20) is provided on the outlet side (4) of the air vent (5) with an air guiding wall section (25) which faces the air vent (5) and runs slantingly upwards, **characterised in that** the upper and lower frame profiles (20, 10) are of identical cross-sectional design and are installed mirror-invertedly to each other about a horizontal plane

2. The air supply shutter according to claim 1,
**characterised in that** the air guiding wall section (25) extends across the entire length of the upper frame profile (20).

3. The air supply shutter according to any one of the preceding claims,
**characterised in that** wall surfaces (31, 41) extending in the direction of air passage are disposed on the lateral frame profiles (30, 40) such that they laterally seal an opening cross-section resulting in a partial opening region of the shutter flap adjacent to the closed position of the shutter flap.

4. The air supply shutter according to claim 3,
**characterised in that** the wall surfaces (31, 41) extend so far in the direction of air passage that, when the shutter flap (100) moves from the closed position to a position in which an opening cross-section of 20%-40%, preferably 30% of the air passage surface is released, a plane of air passage resulting in this position is laterally sealed.

5. The air supply shutter according to claim 3 or 4,
**characterised in that** the horizontal axis (2) is disposed in the lower region of the frame and the wall surfaces (31, 41) extend from an upper region of the lateral frame profiles in the direction of air passage.

6. The air supply shutter according to any one of the preceding claims, comprising an air guiding flap (50) which is pivotably mounted on the upper frame profile (20) and extends across the entire length of the upper frame profile and is provided with a coupling section (52) which is inserted into a matching receiving portion (26) on the upper frame profile (20),
**characterised in that** the coupling section (52) is embodied as an edge (52) of rounded cross-section, which is inserted into the receiving portion embodied as a corresponding receiving groove (26), and that the rounded edge (52) is provided with a locking protrusion (53) extending across the entire length of the edge and which cooperates with at least one, preferably with a plurality of locking grooves (27a-g) extending across the entire length of the receiving groove in order to fix one or several positions of the air guiding flap.

7. The air supply shutter according to claim 6,
**characterised in that** the air guiding flap (50) provides an air duct surface aligned with the air guiding wall section when positioned such that the locking protrusion has latched into the locking groove or one of the locking grooves (27a-g).

8. The air supply shutter according to claim 6 or 7,
**characterised in that** the air guiding flap (50) is a multi-chamber hollow profile, preferably a multi-chamber hollow profile extruded in a direction along its pivot axis.

9. The air supply shutter according to any one of the preceding claims,
**characterised in that** the shutter flap (100) is pivotably mounted about the horizontal axis (2) in the region of an edge on the bearing side and in the closed position sealingly abuts the upper frame profile (20) at a sealing edge (120) opposite said bearing side edge.

10. The air supply shutter according to claim 9,
**characterised in that** the sealing edge (120) sealingly abuts the slanting air guiding wall section (25) in the closed position.

11. The air supply shutter according to claim 9 or 10,
**characterised in that** an elastomeric, preferably post-coextruded seal is moulded on the sealing edge (120).

12. The air supply shutter according to any one of the preceding claims 9 to 11,
**characterised in that** the wall surface (101) on the inlet side of the shutter flap (100) runs as far as the sealing edge in such a way that the stream of air passing through the vent (5) comes into contact with the wall surface (101) in the open or partly opened position of the shutter flap (100), in particular **in that** the wall surface on the inlet side extends in a planar manner as far as the sealing edge.

13. The air supply shutter according to any one of the preceding claims 9 to 12,
**characterised in that** the wall surface (101) on the inlet side of the shutter flap (100) ends at the sealing edge (120) in a sharp stall edge (124).

14. The air supply shutter according to any one of the preceding claims,
**characterised by** a restoring device (140) which exerts a force on the shutter flap (100) in the opposite direction to an opening or closing force caused by the actuating means, and hence into the closed or open position, respectively.

15. The air supply shutter according to the preceding claim,
**characterised in that** the restoring device includes a weight (140) which is disposed on the shutter flap (100) at a distance from the horizontal axis (2) thereof and exerts a force of weight on the shutter flap (100) which is directed in the installed position past the horizontal axis (2), and is directed, in particular, in such a way that it causes the shutter flap (100) to open.

16. The air supply shutter according to any one of the preceding claims,
**characterised in that** a sealing surface (32) lying parallel to the shutter flap (100) in the closed position is embodied on each of the lateral frame profiles (30, 40), and against which the shutter flap (100) abuts with a lateral sealing region in the closed position.

17. The air supply shutter according to any one of the preceding claims,
**characterised in that** the shutter flap (100) is pivotably mounted about the horizontal axis (2) in the region of an edge on the bearing side and in the closed position is sealed against the frame (1) by means of a second elastomeric seal (15).

18. The air supply shutter according to any one of the preceding claims,
**characterised in that** the shutter flap (100) is a multi-chamber hollow profile, in particular a multi-chamber hollow profile extruded in a direction along the horizontal pivot axis.

19. The air supply shutter according to the preceding claim,
**characterised in that** the shutter flap (100) is subdivided by means of at least one inner partition (102) which lies approximately parallel to the wall surface of the shutter flap (100) facing the inlet side in the closed position and which extends parallel to the horizontal pivot axis.

20. The air supply shutter according to the preceding claim 18 or 19,
**characterised in that** the shutter flap is subdivided by means of at least one inner partition which lies approximately perpendicular to the wall surface of the shutter flap facing the inlet side in the closed position and which extends parallel to the horizontal pivot axis.

21. A modular kit for an air supply shutter according to any one of the preceding claims, comprising
- standardised lateral frame profiles (30, 40) of a predefined size,
- a selection of upper and lower frame profiles (10, 20) of different lengths and
- matching shutter flaps (100) of different widths,
- corner connectors for joining the lateral frame profiles to the upper and lower frame profiles,
wherein the upper and lower frame profiles of differing lengths and the shutter flaps (100) of different matching widths may be mounted by means of the corner connectors to an air supply shutter having a desired throughput rate and the upper and lower frame profiles (20, 10) are of identical cross-sectional design and are installed mirror-invertedly to each other about a horizontal plane.

## Revendications

1. Soupape d'amenée d'air pour l'aération d'un bâtiment fermé, comprenant :
- un cadre (1) avec une ouverture de passage d'air (5) délimitée par un profilé de cadre supérieur (20), un profilé de cadre inférieur (10) et deux profilés de cadre latéraux (30, 40) qui relient entre eux le profilé de cadre supérieur et le profilé de cadre inférieur,
- un clapet de soupape (100) agencé sur le cadre de manière à pouvoir pivoter autour d'un axe horizontal (2) de telle manière qu'il ferme l'ouverture de passage d'air (5) dans une position fermée et la libère dans une position ouverte,
- un dispositif de couplage (131) pour le couplage du clapet de soupape avec un dispositif d'actionnement, à l'aide duquel le clapet de soupape peut être déplacé de la position ouverte à la position fermée et/ou inversement, sachant que le profilé de cadre supérieur (20) présente, sur le côté de sortie (4) de l'ouverture de passage d'air (5), une section de paroi de guidage d'air (25) dirigée vers l'ouverture de passage d'air (5), qui s'étend inclinée en biais vers le haut, **caractérisée en ce que** les profilés de cadre (20, 10) supérieurs et inférieurs présentent une section transversale de construction identique et sont construits de manière inversée l'un par rapport à l'autre autour d'un plan horizontal.

2. Soupape d'amenée d'air selon la revendication 1,
**caractérisée en ce que** la section de paroi de guidage d'air (25) s'étend sur la longueur entière du profilé de cadre supérieur (20).

3. Soupape d'amenée d'air selon l'une quelconque des revendications précédentes,
**caractérisée en ce que** des surfaces de paroi (31, 41) s'étendant dans le sens de passage d'air sont disposées sur les profilés de cadre latéraux (30, 40), lesquelles sont disposées de sorte qu'elles rendent étanches latéralement une section transversale d'ouverture apparaissant dans une zone d'ouverture du clapet de soupape partielle contiguë à la position fermée du clapet de soupape.

4. Soupape d'amenée d'air selon la revendication 3,
**caractérisée en ce que** les surfaces de paroi (31, 41) s'étendent dans le sens de passage d'air jusqu'à ce qu'une étanchéité latérale d'un plan de passage d'air se produisant dans cette position soit effectuée à partir de la position fermée jusqu'à une position du clapet de soupape (100) qui libère une section transversale d'ouverture de 20 à 40 %, de préférence 30 % de la surface de passage d'air.

5. Soupape d'amenée d'air selon la revendication 3 ou 4,
**caractérisée en ce que** l'axe horizontal (2) est disposé dans la zone inférieure du cadre et les surfaces de paroi (31, 41) s'étendent à partir d'une zone supérieure du profilé de cadre latéral dans le sens de passage d'air.

6. Soupape d'amenée d'air selon l'une quelconque des revendications précédentes, avec un clapet de guidage d'air (50) logé de manière à pouvoir pivoter sur le profilé de cadre (20) supérieur, qui s'étend sur la longueur entière du profilé de cadre supérieur et présente une section de couplage (52) qui est insérée dans une section de réception (26) congruente à celle-ci sur le profilé de cadre (20) supérieur, **caractérisée en ce que** la section de couplage (52) est réalisée comme une arête arrondie en section transversale (52), qui est insérée dans la section de réception réalisée comme une rainure de réception correspondante (26), et l'arête arrondie (52) présente une saillie de blocage (53) s'étendant sur la longueur entière de l'arête, qui coagit avec au moins une, de préférence plusieurs rainures de blocage (27a-g) s'étendant sur la longueur entière de la rainure de réception afin de fixer une ou plusieurs positions correspondantes du clapet de guidage d'air.

7. Soupape d'amenée d'air selon la revendication 6,
**caractérisée en ce que** le clapet de guidage d'air (50) met à disposition une surface de guidage d'air s'alignant sur la section de paroi de guidage d'air dans une position, dans laquelle la saillie de blocage est encliquetée dans la ou l'une des rainures de blocage (27a-g).

8. Soupape d'amenée d'air selon la revendication 6 ou 7,
**caractérisée en ce que** le clapet de guidage d'air (50) est un profilé creux à plusieurs chambres, de préférence un profilé creux à plusieurs chambres extrudé le long de son axe de pivotement.

9. Soupape d'amenée d'air selon l'une quelconque des revendications précédentes,
**caractérisée en ce que** le clapet de soupape (100) est logé de manière à pouvoir pivoter dans la zone d'une arête côté palier autour de l'axe horizontal (2) et repose de manière étanche contre le profilé de cadre (20) supérieur sur une arête (120) d'étanchéité opposée à cette arête côté palier dans la position fermée.

10. Soupape d'amenée d'air selon la revendication 9,
**caractérisée en ce que** l'arête d'étanchéité (120) repose dans la position fermée de manière étanche contre la section de paroi de guidage d'air (25) inclinée.

11. Soupape d'amenée d'air selon la revendication 9 ou 10,
**caractérisée en ce qu'**une garniture élastomère, de préférence post-coextrudée est formée sur l'arête d'étanchéité (120).

12. Soupape d'amenée d'air selon l'une quelconque des revendications 9 à 11,
**caractérisée en ce que** la surface de paroi côté admission (101) du clapet de soupape (100) s'étend jusqu'à l'arête d'étanchéité de sorte que l'écoulement traversant l'ouverture de passage (5) repose en position ouverte ou partiellement ouverte du clapet de soupape (100) contre la surface de paroi (101), en particulier en ce que la surface de paroi côté admission s'étend de manière plane jusqu'à l'arête d'étanchéité.

13. Soupape d'amenée d'air selon l'une quelconque des revendications précédentes 9 à 12,
**caractérisée en ce que** la surface de paroi côté admission (101) du clapet de soupape (100) se termine sur l'arête d'étanchéité (120) dans une arête de rupture d'écoulement anguleuse (124).

14. Soupape d'amenée d'air selon l'une quelconque des revendications précédentes,
**caractérisée par** un dispositif de rappel (140) qui exerce sur le clapet de soupape (100) une force qui est dirigée à l'opposé d'une force d'ouverture ou de fermeture provoquée par les moyens d'actionnement dans la position fermée ou ouverte correspondante.

15. Soupape d'amenée d'air selon la revendication précédente,
**caractérisée en ce que** le dispositif de rappel comporte un poids (140) qui est disposé à distance de l'axe horizontal (2) sur le clapet de soupape (100) et exerce un poids sur le clapet de soupape (100), qui est dirigé en position de montage de manière à passer devant l'axe horizontal (2), en particulier est dirigé de sorte qu'il provoque une ouverture du clapet de soupape (100).

16. Soupape d'amenée d'air selon l'une quelconque des revendications précédentes,
**caractérisée en ce qu'**une surface étanche (32) se trouvant parallèlement au clapet de soupape (100) dans la position fermée est réalisée sur chacun des profilés de cadre latéraux (30, 40), sur laquelle surface le clapet de soupape (100) repose à l'état fermé avec une zone de garniture latérale.

17. Soupape d'amenée d'air selon l'une quelconque des revendications précédentes,
**caractérisée en ce que** le clapet de soupape (100) est logé de manière à pouvoir pivoter sur une arête côté palier autour de l'axe horizontal (2) et est rendu étanche par rapport au cadre (1) sur cette arête côté palier dans la position fermée à l'aide d'une seconde garniture élastomère (15).

18. Soupape d'amenée d'air selon l'une quelconque des revendications précédentes,
**caractérisée en ce que** le clapet de soupape (100) est un profilé creux à plusieurs chambres, en particulier un profilé creux à plusieurs chambres extrudé le long de l'axe de pivotement horizontal.

19. Soupape d'amenée d'air selon la revendication précédente,
**caractérisée en ce que** le clapet de soupape (100) est divisé à l'aide d'au moins une paroi de séparation intérieure (102) qui se situe à peu près parallèlement à la surface de paroi du clapet de soupape (100) dirigée en position fermée vers le côté d'admission et s'étend parallèlement à l'axe de pivotement horizontal.

20. Soupape d'amenée d'air selon la revendication 18 ou 19,
**caractérisée en ce que** le clapet de soupape est divisé à l'aide d'au moins une paroi de séparation intérieure qui se situe à peu près perpendiculairement à la surface de paroi du clapet de soupape dirigée en position fermée vers le côté d'admission et s'étend parallèlement à l'axe de pivotement horizontal.

21. Ensemble modulaire pour une soupape d'amenée d'air selon l'une quelconque des revendications précédentes, comprenant :
- des profilés de cadre latéraux standardisés (30, 40) d'une grandeur prescrite,
- une sélection de profilés de cadre (10, 20) supérieurs et inférieurs de longueur différente et
- des clapets de soupape (100) de largeur différente adaptés à cet effet,
- des raccords d'angle pour la liaison des profilés de cadre latéraux avec les profilés de cadre supérieurs ou inférieurs,
sachant que les profilés de cadre supérieurs et inférieurs de longueur différente ou les clapets de soupape (100) de largeur différente correspondante peuvent être montés à l'aide des raccords d'angle pour former une soupape d'amenée d'air présentant un débit souhaité et les profilés de cadre supérieurs et inférieurs (20, 10) présentent une section transversale de construction identique et sont construits de manière inversée l'un par rapport à l'autre autour d'un plan horizontal.
